# EUROPÄISCHE PATENTSCHRIFT

(11) **EP 1 505 105 B1**
(45) Veröffentlichungstag und Bekanntmachung des Hinweises auf die Patenterteilung: **21.11.2007**
(21) Anmeldenummer: 04018195.0
(22) Anmeldetag: 31.07.2004
(51) Int. Cl.: C08J 9/36, B29C 44/56

(54) **Formteile aus Melamin/Formaldehyd-Schaumstoffen mit geringer Formaldehyd-Emission**
Moulded parts from melamine/formaldehyde foams having a low emission of formaldehyde
Pièces moulées en mousse de mélamine-formaldéhyde ayant une émission de formaldéhyde réduite

(30) Priorität: 04.08.2003 DE 10335957
(43) Veröffentlichungstag der Anmeldung: 09.02.2005
(73) Patentinhaber: BASF Aktiengesellschaft, 67056 Ludwigshafen (DE)
(72) Erfinder: Baumgartl, Horst Dr., 55122 Mainz (DE); Gross, Bernd, 67259 Grossniedesheim (DE); Schierholz, Jens Dr., 64625 Bensheim (DE)

(56) Entgegenhaltungen:
- EP-A- 0 017 671
- EP-A- 0 111 860
- WO-A-01/94436
- WO-A-02/26871
- DE-A- 3 534 739

## Beschreibung

Die Erfindung betrifft Formteile aus Melamin/Formaldehyd-Schaumstoff, wobei die Formteile eine Formaldehyd-Emission von unter 0,1 ppm aufweisen, bestimmt nach DIN 55666, und erhältlich sind nach folgendem Verfahren:
a) aus einem Melamin/Formaldehyd-Vorkondensat mit einem Molverhältnis Melamin : Formaldehyd größer als 0,5, wird ein Schaumstoff hergestellt,
b) der erhaltene Schaumstoff wird bei einer Temperatur von unter 200°C getempert, und
c) der getemperte Schaumstoff wird in einer Presse bei einer Temperatur von 160 bis 240°C und einem Absolutdruck von 5 bis 100 bar innerhalb von 15 bis 120 sec zu dem Formteil verpresst.

Weiterhin betrifft die Erfindung das genannte Verfahren zur Herstellung der Formteile, und die Verwendung der Formteile zur akustischen oder thermischen Isolierung.

Dreidimensionale Formkörper aus offenzelligen, elastischen, duroplastischen Schaumstoffen eignen sich aufgrund ihrer Stoffeigenschaften, wie hohe Temperaturbeständigkeit, günstiges Brandverhallten und gute Chemikalienbeständigkeit, besonders für anspruchsvolle Anwendungen im Wärme- und Schallschutz.

Offenzellige elastische Schaumstoffe auf Basis von Melamin/Formaldehyd-Kondensationsprodukten sowie Verfahren zu ihrer Herstellung sind bekannt und beispielsweise in den Patentanmeldungen EP-A 17 671, 17 672 und 37 470 sowie den entsprechenden Patenten beschrieben. Dabei wird eine treibmittelhaltige Lösung oder Dispersion eines Melamin/Formaldehyd-Vorkondensates durch Erhitzen, z.B. mit Heißluft, Wasserdampf, Hochfrequenzbestrahlung, Mikrowellenbestrahlung oder durch Ausnutzen von Reaktionswärme, auf eine Temperatur oberhalb des Siedepunktes des Treibmittels verschäumt. Man erhält je nach Schäumverfahren und -form einen Schaumblock oder - strang, der durch Tempern (Temperaturbehandlung, bei der der Schaum über eine definierte Zeit bei definierter, meist erhöhter Temperatur gehalten wird) zum fertigen Schaumstoff aushärtet.

Während sich einfache Formteile wie z.B. Platten oder Streifen, aus dem Schaumstoff durch Schneiden oder Sägen herstellen lassen, sind für Formteile mit komplizierterer Raumform aufwändigere Formgebungsverfahren erforderlich. Solche kompliziert geformten Teile sind beispielsweise in Kraftfahrzeugen (z.B. Motorraumisolierung) oder Maschinen enthalten oder dienen als Rohrisolierung. Zur Herstellung solcher Teile offenbart die FR-A 1 108 336, einen im aushärtenden Zustand befindlichen, aber noch verformbaren Schaum zu verpressen und anschließend den so verdichteten Schaum auszuhärten. Die US-A 3 504 064 und die EP-A 464 490 beschreiben Verfahren, bei denen der Schaum mit Wasser oder Wasserdampf behandelt und davor oder danach verformt wird. Die EP-A 111 860 beschreibt das Verpressen von Melaminharz-Schaumstoffen bei 60 bis 300°C und mindestens 1,2 bar Absolutdruck.

Die nach den vorgenannten Verfahren erhaltenen Formteile aus Melamin/Formaldehyd-Harz enthalten Restmengen an nicht umgesetztem Formaldehyd, die über lange Zeit kontinuierlich an die Umgebungsluft abgegeben werden. Diese Formaldehyd-Emissionen steigen mit zunehmender Temperatur und Feuchte an. Sie sind unerwünscht und insbesondere bei Verwendung der Formteile in geschlossenen Räumen nachteilig. So sollte beispielsweise in Innenräumen von Gebäuden oder im Fahrzeuginnenraum die Formaldehydkonzentration der Luft so gering wie möglich sein.

Die WO 01/94436 lehrt ein Verfahren zur Herstellung von Melamin/Formaldehyd-Schaumstoffen mit verminderter Formaldehyd-Emission, wozu ein Melamin/Formaldehyd-Vorkondensat mit einem Molverhältnis Melamin : Formaldehyd größer als 1:2, eingesetzt wird. Die zu verschäumende, treibmittelhaltige Mischung wird durch Erhitzen zu beispielsweise quaderförmigen Strängen oder Blöcken aufgeschäumt. Danach werden die expandierten Schaumblöcke 1 bis 180 min bei 120 bis 300°C, in den Beispielen 30 min bei 220°C, getempert und ausgehärtet. Die auf diese Weise erhaltene Schaumstoffe sind zwar formaldehydarm, jedoch nicht thermoformbar.

In der EP-A 451 535 wird ein Verfahren zur Herstellung eines Formteils aus Melaminharzschaumstoff beschrieben, bei dem der Formteil-Rohling mit einem wärmeaushärtenden Bindemittel imprägniert und anschließend heißverpresst wird. Als Bindemittel werden Phenolharze bzw. Melaminharze verwendet, die auf die Rohlingoberfläche aufgestrichen bzw. als Schaum aufgetragen werden.

Die DE-A 196 49 796 offenbart ein ähnliches Verfahren, wobei als Bindemittel eine (Meth)acrylamid-Polymerdispersion verwendet wird. Die beiden letztgenannten Verfahren erfordern demnach einen zusätzlichen Einsatzstoff, der in einem zusätzlichen Arbeitsgang aufgebracht werden muss.

Die mit den Verfahren des Standes der Technik ohne Imprägnierung durch Pressen erhaltenen Formteile, insbesondere flächige Formteile, weisen nicht in allen Fällen die gewünschte Geometrie auf, d.h. die Raumform des fertigen Formteils weicht von der Geometrie des Presswerkzeugs ab und das Formteil hat nicht die gewünschte Form. Außerdem haben die Formteilränder bzw. -kanten häufig nicht die gewünschte Stabilität, beispielsweise sind sie nicht geschlossen, oder nicht ausreichend mechanisch belastbar. In diesen Fällen ist das Formteil für Verwendungen, die eine gute Passgenauigkeit erfordern, z.B. im Fahrzeugbau, unbrauchbar, oder es müssen die Formteilgeometrie bzw. die Ränder in einem zusätzlichen Arbeitsschritt aufwändig nachbearbeitet werden.

Es bestand die Aufgabe, den geschilderten Nachteilen abzuhelfen. Insbesondere bestand die Aufgabe, Formteile aus Melamin/Formaldehyd-Schaumstoff bereitzustellen, die eine geringe Formaldehyd-Emission aufweisen.

Außerdem sollte ein Verfahren bereitgestellt werden, mit dem sich die Formteile auf einfache Weise herstellen lassen. Beispielsweise sollte zur Formgebung die Zuhilfenahme von Wasser oder Wasserdampf überflüssig sein.

Weiterhin sollten sich die Formteile ohne Mitverwendung von Bindemitteln herstellen lassen. Insbesondere sollte das Verfahren ohne einen zusätzlichen Imprägnierungsschritt auskommen, bei dem das Bindemittel aufgetragen wird.

Außerdem sollten die Formteile genau die gewünschte Geometrie, und stabile, präzise geformte Ränder bzw. Kanten aufweisen.

Schließlich sollten Formteile bereitgestellt werden, die alle vorgenannten Forderungen gleichzeitig erfüllen, d.h. die Formteile sollten formaldehydarm sein, und sich auf einfache Weise, in der gewünschten Geometrie und mit stabilen und präzisen Rändern bzw. Kanten, in wenigen Verfahrensschritten, ohne Formgebung mittels Wasserdampf, und ohne Imprägnierung mit Bindemitteln, herstellen lassen.

Demgemäß wurden die eingangs definierten Formteile, Verfahren und Verwendungen gefunden. Bevorzugte Ausgestaltungen der Erfindung sind den Unteransprüchen zu entnehmen.

Erfindungsgemäß weisen die Formteile aus Melamin/Formaldehyd-Schaumstoff eine Formaldehyd-Emission von unter 0,1 ppm auf, bestimmt nach DIN 55666 vom April 1995. 0,1 ppm entspricht 0,12 mg Formaldehyd pro m³ Luft.

Bevorzugt liegt die Formaldehyd-Emission bei unter 0,05 ppm, bestimmt wie vorstehend beschrieben.

Die erfindungsgemäßen Formteile sind demnach besonders formaldeydarm. Sie sind erhältlich nach einem erfindungsgemäßen Verfahren mit drei Schritten a), b) und c).

In Schritt a) des Verfahrens wird aus einem Melamin/Formaldehyd-Vorkondensat mit einem Molverhältnis Melamin : Formaldehyd größer als 0,5, ein Schaumstoff hergestellt. Dies erfolgt in an sich bekannter Weise und ist beispielsweise in der WO 01/94436 beschrieben.

Dabei geht man aus von einem Melamin/Formaldehyd-Vorkondensat. Melamin/Formaldehyd-Kondensationsprodukte können neben Melamin bis zu 50, vorzugsweise bis 20 Gew.-% modifizierender Verbindungen, und neben Formaldehyd bis zu 50, vorzugsweise bis zu 20 Gew.-% anderer Aldehyde, einkondensiert enthalten. Besonders bevorzugt ist ein unmodifiziertes Melamin/Formaldehyd-Kondensationsprodukt. Als modifizierende Verbindungen kommen beispielsweise in Frage: alkyl- und arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als andere Aldehyde können z.B. Acetaldehyd, Trimethylolacetaldehyd, Acrolein, Benzaldehyd, Furfurol, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin : Formaldehyd ist definiert als Quotient Stoffmenge Melamin/Stoffmenge Formaldehyd und ist erfindungsgemäß größer als 0,5 (also 1:2). Es liegt bevorzugt zwischen 1 (also 1:1) und 0,526 (also 1:1,9), insbesondere zwischen 0,769 (also 1:1,3) und 0,556 (also 1:1,8).

Nach EP-A 37470 enthalten die Melaminharze vorteilhaft Sulfitgruppen einkondensiert, was beispielsweise durch Zusatz von 1 bis 20 Gew.-% Natriumhydrogensulfit bei der Kondensation des Harzes geschehen kann. Es hat sich nun gezeigt, dass ein relativ hoher Sulfitgruppengehalt bei konstantem Melamin:Formaldehyd-Verhältnis eine höhere Formaldehyd-Emission des Schaumstoffs zur Folge hat. Das eingesetzte Vorkondensat sollte deshalb bevorzugt praktisch keine Sulfitgruppen enthalten, d.h. der Sulfitgruppengehalt sollte bevorzugt unter 1 %, besonders bevorzugt unter 0,1 % und insbesondere Null betragen, bezogen auf das Vorkondensat.

Zur Emulgierung des Treibmittels und zur Stabilisierung des Schaums ist der Zusatz eines Emulgators oder eines Emulgatorgemisches erforderlich. Als Emulgator können anionische, kationische und nichtionische Tenside sowie deren Gemische verwendet werden. Geeignete anionische Tenside sind Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Emulgatoren kommen Alkyltriammoniumsalze, Alkylbenzyldimethylammoniumsalze und Alkylpyridiniumsalze zum Einsatz. Die Emulgatoren werden vorzugsweise in Mengen von 0,2 bis 5 Gew.-%, bezogen auf das Harz, zugesetzt.

Um aus der Melaminharz-Lösung einen Schaum zu erzeugen, muss diese ein emulgiertes Treibmittel enthalten, wobei sich die Menge nach der erwünschten Dichte des Schaumstoffs richtet. Prinzipiell können bei dem erfindungsgemäßen Verfahren sowohl physikalische als auch chemische Treibmittel angewandt werden. Als physikalische Treibmittel bieten sich z.B. an: Kohlenwasserstoffe, halogenierte, insbesondere fluorierte Kohlenwasserstoffe, Alkohole, Ether, Ketone und Ester in flüssiger Form oder Luft und CO₂ als Gase. Als chemische Treibmittel kommen z.B. Isocyanate in Gemisch mit Wasser in Frage, wobei als wirksames Treibmittel CO₂ freigesetzt wird, ferner Carbonate und Hydrogencarbonate im Gemisch mit Säuren, die ebenfalls CO₂ erzeugen, sowie Azoverbindungen, wie Azodicarbonamid. Bei einer bevorzugten Ausführungsform der Erfindung wird der wässrigen Lösung bzw. Dispersion zwischen 1 und 40 Gew.-%, bezogen auf das Harz, eines physikalischen Treibmittels mit einem Siedepunkt zwischen 0 und 80°C zugesetzt; bei Pentan sind es vorzugsweise 5 bis 15 Gew.-%.

Als Härter werden acide Verbindungen eingesetzt, die die Weiterkondensation des Melaminharzes katalysieren. Die Mengen liegen zwischen 0,01 und 20, vorzugsweise zwischen 0,05 und 5 Gew.-%, bezogen auf das Harz. In Frage kommen anorganische und organische Säuren, z.B. Salzsäure, Schwefelsäure, Phosphorsäure, Salpetersäure, Ameisensäure, Essigsäure, Oxalsäure, Toluolsulfonsäuren, Amidosulfonsäuren sowie Säureanhydride.

Die wässrige Lösung bzw. Dispersion kann je nach Verwendung des Formteils frei sein von weiteren Zusatzstoffen. Für manche Zwecke kann es jedoch günstig sein, bis zu 20 Gew.-%, vorzugsweise weniger als 10 Gew.-%, bezogen auf das Harz, üblicher Zusatzstoffe, wie Farbstoffe, Flammschutzmittel, UV-Stabilisatoren, Mittel zur Herabsetzung der Brandgastoxizität oder zur Förderung der Verkohlung zuzusetzen. Da die Schaumstoffe im allgemeinen offenporig sind und Wasser aufnehmen können, kann es für manche Anwendungszwecke notwendig sein, Hydrophobierungsmittel in Mengen von 0,2 bis 5 Gew.-% zuzusetzen. In Frage kommen dabei z.B. Paraffin-, Silikon- und Fluoralkandispersionen, insbesondere -emulsionen.

Die Konzentration des Melamin/Formaldehyd-Vorkondensates in der Mischung aus Vorkondensat und Lösungsmittel kann in weiten Grenzen zwischen 55 und 85, vorzugsweise zwischen 63 und 80 Gew.-% schwanken. Die bevorzugte Viskosität der Mischung aus Vorkondensat und Lösungsmittel liegt zwischen 1 und 3000 dPas, vorzugsweise zwischen 5 und 2000 dPas.

Die Zusatzstoffe werden mit der wässrigen Lösung oder Dispersion des Melaminharzes homogen vermischt, wobei das Treibmittel ggf. auch unter Druck eingepresst werden kann. Man kann jedoch auch von einem festen, z.B. sprühgetrockneten Melaminharz ausgehen und dieses dann mit einer wässrigen Lösung des Emulgators, dem Härter sowie dem Treibmittel vermischen. Das Vermischen der Komponenten kann z.B. in einem Extruder vorgenommen werden. Nach dem Vermischen wird die Lösung oder Dispersion durch eine Düse ausgetragen und unmittelbar anschließend erhitzt und dabei verschäumt.

Das Erhitzen der treibmittelhaltigen Lösung oder Dispersion kann grundsätzlich - wie u.a. in EP-A 17671 beschrieben - durch Heißluft, Wasserdampf, Hochfrequenzbestrahlung, Mikrowellenbestrahlung oder durch Ausnutzen von Reaktionswärme vorgenommen werden. Bevorzugt wird aber das erforderliche Erhitzen durch Ultrahochfrequenzbestrahlung nach EP-A 37470 durchgeführt. Bei dieser dielektrischen Strahlung kann grundsätzlich mit Mikrowellen im Frequenzbereich von 0,2 GHz bis 100 GHz gearbeitet werden. Für die industrielle Praxis stehen Frequenzen von 0,915, 2,45 und 5,8 GHz zur Verfügung, wobei 2,45 GHz besonders bevorzugt sind. Strahlungsquelle für dielektrische Strahlung ist das Magnetron, wobei auch mit mehreren Magnetronen gleichzeitig bestrahlt werden kann. Es ist darauf zu achten, dass bei der Bestrahlung die Feldverteilung möglichst homogen ist. Zweckmäßigerweise wird die Bestrahlung so durchgeführt, dass die Leistungsaufnahme der Lösung oder Dispersion zwischen 5 und 200, vorzugsweise zwischen 9 und 120 kW, bezogen auf 1 kg Wasser in der Lösung bzw. Dispersion liegt. Ist die aufgenommene Leistung geringer, dann findet kein Aufschäumen mehr statt und die Mischung härtet nur noch aus. Arbeitet man innerhalb des bevorzugten Bereichs, so schäumt die Mischung umso schneller, je größer die Leistungsaufnahme ist. Oberhalb von etwa 200 kW pro kg Wasser erhöht sich die Schäumgeschwindigkeit nicht mehr wesentlich.

Die Bestrahlung der zu verschäumenden Mischung erfolgt üblicherweise unmittelbar nachdem sie aus der Schäumdüse ausgetreten ist. Dabei wird die infolge Temperaturerhöhung und Verdampfen des Treibmittels aufschäumende Mischung beispielsweise auf umlaufende Bänder aufgebracht, die einen Rechteck-Kanal zur Formung des Schaums bilden. Man erhält einen Schaumstoffstrang, der üblicherweise in Blöcke zerteilt wird.

Geeignete Melamin/Formaldehyd-Schaumstoffe sind beispielsweise als Basotect® von BASF im Handel erhältlich.

In Schritt b) des erfindungsgemäßen Verfahrens wird der in Schritt a) erhaltene Schaumstoff bei einer Temperatur von unter 200°C getempert. Bevorzugt tempert man bei Temperaturen (Tempertemperaturen) über 100°C. Bevorzugt beträgt die Tempertemperatur 110 bis 200°C, insbesondere 110 bis 160°C.

Beim Tempern findet eine sog. Nachhärtung statt, d.h. der Schaumstoff härtet weiter aus. Außerdem reduziert das Tempern die Formaldehyd-Emission des Schaums. Auch Reste anderer flüchtiger Inhaltsstoffe werden beim Tempern weitgehend entfernt, beispielsweise Monomerreste, Treibmittel und sonstige Hilfsmittel.

Die Dauer des Temperns (Temperzeit) hängt u.a. von den Abmessungen des Schaumstoffs, seiner Zusammensetzung, und der Temperatur ab, bei der getempert wird. Temperzeit und -temperatur werden in dem Fachmann bekannter Weise derart gewählt, dass die beschriebene Nachhärtung stattfinden kann. Bevorzugt beträgt die Temperzeit 5 bis 60 min, insbesondere 10 bis 30 min. Der beim Tempern herrschende Druck (Temperdruck) kann beispielsweise Atmosphärendruck, z.B. Normaldruck (1013 mbar) sein.

Temperatur und Druck des Temperns können über die gesamte Temperzeit konstant sein, oder in geeigneter Weise variiert werden. Bevorzugt arbeitet man bei konstanten Bedingungen, jedoch können auch Temperatur- bzw. Druckprogramme vorteilhaft sein.

Das Tempern kann mittels üblicher Verfahren in üblichen Apparaturen, beispielsweise in Wärmeschränken oder -kammern, erfolgen. Jedoch tempert man bevorzugt mittels Heißluft oder anderer heißer Gase, die man durch den Schaumstoff hindurchleitet.

In einer besonders bevorzugten Ausführungsform wird direkt nach der Herstellung des Schaumstoffs getempert, indem man den bei der Schaumstoffherstellung erhaltenen Schaumstoff, beispielsweise die erwähnten Schaumstoffblöcke, mit Heißluft behandelt. Die durchströmende Heißluft härtet den Schaumstoffblock aus.

In einer ebenfalls bevorzugten Ausführungsform werden aus dem derart erhaltenen, getemperten Schaumstoffblock durch Zerschneiden einzelne Platten bzw. Schichten von beispielsweise 0,1 bis 10, insbesondere 0,5 bis 5 cm Dicke hergestellt. Aus der erhaltenen Platte bzw. Schicht kann erforderlichenfalls ein Zuschnitt hergestellt werden, z.B. indem man die Ränder der Platte bzw. Schicht entsprechend beschneidet, oder den Zuschnitt aus der Platte bzw. Schicht ausstanzt. Die erhaltene Schaumstoffplatte oder -schicht bzw. der Zuschnitt wird dann in Schritt c) des Verfahrens verpresst.

Es versteht sich, dass geeignete Schaumstoffplatten, -schichten bzw. -zuschnitte auch in anderer Weise hergestellt werden können, beispielsweise durch Sägen statt Schneiden, oder andere übliche Methoden der Zurichtung. Es ist auch möglich, jedoch nicht bevorzugt, das Aufschäumen und Tempern derart auszugestalten, dass unmittelbar, d.h. ohne Schneiden oder sonstiges Zurichten, eine Platte oder Schicht der gewünschten Dicke entsteht.

Die Schaumstoffplatte oder -schicht bzw. der Zuschnitt weist bevorzugt an jeder Stelle dieselbe Dicke auf (planparallele Oberflächen). Je nach gewünschter Geometrie und Dichteverteilung des fertigen Formteils kann man jedoch - z.B. durch entsprechende Schnittführung beim Schneiden des Schaumstoffblocks, Kontur- oder Profilschneiden-auch keil- oder dachförmige oder auf andere Weise nicht planparallel geformte Platten, Schichten bzw. Zuschnitte herstellen.

Es ist auch möglich, aus dem ungetemperten Schaumstoff zunächst Schaumstoffplatten, -schichten bzw. -zuschnitte herzustellen und diese dann zu tempern.

In Schritt c) des erfindungsgemäßen Verfahrens wird der in Schritt b) erhaltene, getemperte Schaumstoff in einer Presse bei einer Temperatur von 160 bis 240°C und einem Absolutdruck von 5 bis 100 bar innerhalb von 15 bis 120 sec zu dem Formteil verpresst.

Bevorzugt verpresst man bei einer Temperatur (Presstemperatur) von 180 bis 220°C, und einem Absolutdruck (Pressdruck) von 10 bis 80 bar. Die bevorzugte Presszeit beträgt 20 bis 60 sec.

Die im Einzelfall zu wählenden Presstemperaturen, -drucke und -zeiten richten sich in üblicher Weise nach der Zusammensetzung des Schaums (z.B. Art und Menge des Härters), und nach der Dichte, Dicke und Härte des zu verpressenden Schaums, beispielsweise auch nach der Vorbehandlung des Schaums, zu der auch das Tempern in Schritt b) gehört. Außerdem sind u.a. die Dichte, Dicke, Gestalt und Härte des gewünschten Formteils, und ggf. vorhandene Kaschierungen bzw. Deckschichten (siehe unten) zu berücksichtigen. Presstemperatur, -druck und -zeit sind bevorzugt derart einzustellen, dass das in Schritt c) erhaltene Formteil im Wesentlichen bereits die endgültige Raumform aufweist.

Dabei erfordern möglicherweise Formteile mit großer Fläche bzw. großem Volumen eine längere Presszeit als kleinere Formteile. Außerdem kann der Pressdruck ggf. umso höher und/oder die Presszeit umso länger sein, je härter bzw. dicker der getemperte Schaum ist, und höher die gewünschte Dichte des fertigen Formteils sein soll.

Presstemperatur und Pressdruck können über die gesamte Presszeit konstant sein, oder in geeigneter Weise variiert werden. Meist wird bei konstanten Bedingungen verpresst, jedoch können insbesondere bei großen oder kompliziert geformten Teilen auch Temperatur- oder Druckprogramme vorteilhaft sein.

Das Verpressen geschieht in üblicher Weise und bevorzugt diskontinuierlich, indem man den in Schritt b) erhaltenen getemperten Schaumstoff - bevorzugt als Schaumstoffplatte, -schicht bzw. -zuschnitt - in eine geeignete Presse einlegt und verpresst. Die Pressform (das Presswerkzeug) ist in der Regel temperierbar, beispielsweise durch elektrische Beheizung oder Beheizung mittels eines Wärmeträgermediums und die Presse ist üblicherweise mit einer Auswurfvorrichtung versehen. Gut geeignet als Pressform sind sog. Konturwerkzeuge, mit denen sich besonders gut solche Formteile herstellen lassen, die präzise geformte Kanten bzw. Ränder, beispielsweise profilierte Kanten oder Randlippen, aufweisen sollen.

Geeignete Pressen sind beispielsweise übliche Etagenpressen (Ein- oder Mehretagenpressen), Kniehebelpressen, Oberdruckpressen, Spritzpressen (Transferpressen), Unterdruckpressen, sowie Pressautomaten. Nach dem Verpressen wird üblicherweise die Presse geöffnet und das fertige Formteil mit einer Auswurfvorrichtung aus der Presse entfernt.

Die nach dem vorstehend beschriebenen, erfindungsgemäßen Verfahren erhältlichen Formteile weisen bereits sehr geringe Formaldehyd-Emissionen von maximal 0,1 ppm auf, ermittelt wie oben angegeben.

In einer bevorzugten Ausführungsform werden die fertigen Formteile nach dem Verpressen (Schritt c)) in einem Schritt d) bei einer Temperatur (Lagertemperatur) von über 180°C mindestens 30 min (Lagerzeit) gelagert.

Bevorzugt beträgt die Lagertemperatur maximal 240°C, und besonders bevorzugt liegt sie bei 200 bis 220°C. Bevorzugt lagert man die Formteile 30 bis 120 min. Die Lagerung kann beispielsweise bei Atmosphärendruck, z.B. Normaldruck 1013 mbar, erfolgen.

Durch das nachträgliche Lagern lässt sich die Formaldehyd-Emission noch weiter absenken. Auch der Gehalt an anderen, bereits genannten flüchtigen Inhaltsstoffen, kann weiter vermindert werden. Außerdem wurde beobachtet, dass durch die beschriebene Lagerung die Formteile hydrophober werden. Möglicherweise werden bei der Lagertemperatur von über 180°C polare (also hydrophile) funktionelle Gruppen, die im Melamin/Formaldehyd-Polymer noch enthalten sind, abgespalten, wodurch das Polymer unpolarer, also hydrophober wird. Wird ein Wassertropfen auf einen solchen hydrophoben Schaumstoff aufgebracht, behält er auf der Schaumoberfläche seine Halbkugelform bei und wird nicht, wie im Falle eines hydrophilen Schaums, sofort aufgesaugt.

Die Formteile können als solche verwendet werden, d.h. mit unbehandelten, insbesondere unkaschierten Oberflächen. In einer bevorzugten Ausführungsform sind eine oder mehrere Formteiloberflächen mit Deckschichten versehen oder kaschiert, z.B. mit Glasfaser- oder Textilschichten (insbesondere Vliesen oder Geweben), Metallblechen, - geweben oder -folien, Kunststoffschichten, -geweben, -vliesen oder -folien, die auch geschäumt sein können. Als Textilschichten sind Faservliese bzw. Fasergewebe auf Basis von Glasfasern, Polyesterfasern, Carbonfasern, Aramidfasern, oder flammwidrig ausgerüstete Naturfasern verwendbar.

Die Deckschicht bzw. Kaschierung kann in üblicher Weise auf die Formteiloberfläche aufgebracht werden, beispielsweise durch Verkleben mit dazu geeigneten Klebern, insbesondere bei Vliesen und Geweben auch durch Vernähen, Versteppen, Tackern, Nadeln oder Vernieten.

Man kann die Deckschicht bzw. Kaschierung nachträglich auf das fertige Formteil aufbringen, oder - bevorzugt - bereits bei der Herstellung des Formteils anbringen. Beispielsweise kann man beim Verpressen des Schaumstoffs in Schritt c), den Schaumstoff mit entsprechenden Deckschichten bzw. Kaschierungen abdecken und danach verpressen, oder man kann die Deckschichten bzw. Kaschierungen in die Pressform einlegen und mit dem Schaumstoff verpressen. Soll z.B. ein flächiges Formteil auf seiner Unterseite mit einem Vlies A und auf seiner Oberseite mit einem Vlies B kaschiert werden, so kann man die Schichten in der Reihenfolge A-S-B anordnen und anschließend verpressen (S = Schaumstoffschicht), wodurch in einem Arbeitsgang das beidseitig kaschierte Formteil entsteht.

Es versteht sich, dass auch mehrschichtige Kaschierungen möglich sind, z.B. durch sukzessives Aufbringen weiterer Schichten auf das fertige Formteil, oder bereits bei der Formteilherstellung durch Verpressen aufeinanderliegender Schichten, die zuvor in der gewünschten Reihenfolge angeordnet wurden. Natürlich kann man auch eine erste Kaschierung beim Verpressen, und eine zusätzliche Kaschierung nachträglich, anbringen.

Besonders bevorzugt sind eine oder mehrere Formteiloberflächen mit einer hydrophoben oder oleophoben Textilschicht kaschiert. Als hydrophobe Textilschicht eignen sich beispielsweise Glasfasern, Polyesterfasern oder Polyamidfasern, die mit Paraffin-, Silikon- oder Fluoralkanemulsionen hydrophob ausgerüstet sind. Als oleophobe Textilschicht kommen z.B. Glasfasern, Polyesterfasern oder Polyamidfasern, die mit Fluoralkanemulsionen oleophob ausgerüstet sind, in Betracht.

Gemäß der vorstehenden Beschreibung betrifft die Erfindung neben den Formteilen auch das Verfahren zur Herstellung der Formteile, gekennzeichnet durch folgende Schritte:
a) aus einem Melamin/Formaldehyd-Vorkondensat mit einem Molverhältnis Melamin : Formaldehyd größer als 0,5 wird ein Schaumstoff hergestellt,
b) der erhaltene Schaumstoff wird bei einer Temperatur von unter 200°C getempert, und
c) der getemperte Schaumstoff wird in einer Presse bei einer Temperatur von 160 bis 240°C und einem Absolutdruck von 5 bis 100 bar innerhalb von 15 bis 120 sec zu dem Formteil verpresst;
   und sie betrifft das genannte Verfahren, gekennzeichnet dadurch, dass nach dem Verpressen (Schritt c))
d) die Formteile bei einer Temperatur von über 180°C mindestens 30 min gelagert werden.

Die erfindungsgemäßen Formteile haben vielfältige Verwendungen. Bevorzugt - und ebenfalls Gegenstand der Erfindung - ist die Verwendung der Formteile zur akustischen oder thermischen Isolierung.

Sie werden beispielsweise im Bauwesen als Wärmeisolierung und zur Schalldämpfung von Gebäuden und Gebäudeteilen, insbesondere von Decken und Wänden, verwendet, weiterhin zur Wärmedämmung und Schalldämpfung der Innenräume von Fahrzeugen und Flugzeugen, zur Schalldämpfung von Fahrzeugmotorräumen sowie zur Tieftemperaturisolierung, z.B. von Kühlhäusern und Flüssiggasbehältern. Aufgrund der hohen Härte vernetzter Melaminharze können die Formteile auch leicht abrasiv wirkende Reinigungs-, Schleif- und Polierschwämme sein, wobei auf die Oberfläche des Schwamms geeignete Reinigungs-, Schleif- und Poliermittel aufgebracht, bzw. in das Innere des Schwamms eingebracht, werden können. Auch können die Schwämme für spezielle Reinigungsaufgaben hydrophob und oleophob ausgerüstet werden.

Besonders bevorzugt ist die Verwendung im Fahrzeugbau, im Maschinenbau, im Bauwesen oder zur Isolierung von Rohrleitungen. Im Fahrzeugbau werden die Formteile beispielsweise als Motorhaubenabdämpfung, Stimwandisolierung oder Getriebetunnelabdeckung verwendet. Im Maschinenbau können sie z.B. in Verbindung mit Schichten aus schweren Materialien, zur Schalldämpfung lauter Motoren eingesetzt werden. Diese Verwendungen sind gleichfalls Gegenstand der Erfindung.

Die erfindungsgemäßen Formteile zeichnen sich durch sehr geringe Formaldehyd-Emissionen aus. Sie lassen sich auf einfache Weise herstellen. Das fertige Formteil zeigt eine gute Abformung der Geometrie des Presswerkzeuges, d.h. es hat die gewünschte Geometrie, und weist präzise, geschlossene, stabile und mechanisch belastbare Ränder bzw. Kanten auf.

Das erfindungsgemäße Verfahren zur Herstellung der Formteile zeichnet sich durch wenige einfache Arbeitsgänge aus. So ist kein Wasser oder Wasserdampf zur Formgebung erforderlich. Ebenso müssen keine Bindemittel mitverwendet werden, insbesondere muss nicht in einem zusätzlichen Arbeitsgang mit einem Bindemittel imprägniert werden.

### Beispiele:

### Erfindungsgemäßes Beispiel 1 :

Aus einem Melamin/Formaldehyd-Vorkondensat mit einem Molverhältnis Melamin : Formaldehyd von 0,625 (also 1:1,6) wurde in üblicher Weise ein Schaumstoff hergestellt und bei 160°C mit Heißluft getempert. Der getemperte Schaumstoff wurde zu 25 mm dicken Platten zerschnitten.

Der Zuschnitt wurde auf seiner Ober- und Unterseite jeweils mit einem hydrophoben Textilvlies abgedeckt. Danach verpresste man in einem Konturwerkzeug 30 sec bei einer Presstemperatur von 200°C und einem Pressdruck von 60 bar (absolut).

Das aus dem Presswerkzeug entnommene Formteil zeigte eine sehr gute Abformung der Geometrie des Presswerkzeuges mit stabilen, geschlossenen und mechanisch belastbaren Randlippen. Die Formaldehydemission lag bei 0,02 ppm, gemessen nach DIN 55666.

### Vergleichsbeispiel 1 :

Beispiel 1 wurde wiederholt, wobei das Molverhältnis Melamin : Formaldehyd des Vorkondensats 0,333 (also 1:3) betrug, und der Schaumstoff bei 240°C getempert wurde.

Das aus dem Presswerkzeug entnommene Formteil zeigte eine unvollständige Abformung der Geometrie des Presswerkzeuges mit nicht geschlossenen Randlippen, und war deshalb unbrauchbar. Die Formaldehydemission lag bei 0,03 ppm, gemessen nach DIN 55666.

Das Vergleichsbeispiel zeigt, dass sich auch aus formaldehydreichen Melaminharzen formaledhydarme Formteile herstellen ließen. Jedoch war dazu eine - nicht erfindungsgemäß - hohe Tempertemperatur von 240°C erforderlich. Das erhaltene Formteil war Ausschussware, da es fehlerhaft geformt war und unzureichende Ränder aufwies.

### Vergleichsbeispiel 2 :

Beispiel 1 wurde wiederholt, wobei das Molverhältnis Melamin/Formaldehyd des Vorkondensats 0,333 (also 1:3) betrug, und der Schaumstoff wie in Beispiel 1 bei 160°C getempert wurde.

Das aus dem Presswerkzeug entnommene Formteil zeigte eine sehr gute Abformung der Geometrie des Presswerkzeuges mit stabilen, geschlossenen und mechanisch belastbaren Randlippen. Die Formaldehydemission lag bei 7 ppm, gemessen nach DIN 55666.

Senkte man die Tempertemperatur erfindungsgemäß unter 200°C, hier 160°C, erhielt man zwar ein fehlerfrei geformtes Formteil mit guten Rändern, jedoch war das Formteil nicht formaldehydarm: die Formaldehydemission war mit 7 ppm weit höher als der erfindungsgemäße Maximalwert von 0,1 ppm.

## Patentansprüche

1. Verfahren zur Herstellung von Formteilen aus Melamin/Formaldehyd-Schaumstoff, **gekennzeichnet durch** folgende Schritte:
a) aus einem Melamin/Formaldehyd-Vorkondensat mit einem Molverhältnis Melamin : Formaldehyd größer als 0,5 wird ein Schaumstoff hergestellt,
b) der erhaltene Schaumstoff wird bei einer Temperatur von unter 200°C getempert, und
c) der getemperte Schaumstoff wird in einer Presse bei einer Temperatur von 160 bis 240°C und einem Absolutdruck von 5 bis 100 bar innerhalb von 15 bis 120 sec zu dem Formteil verpresst.

2. Verfahren nach Anspruch 1, **gekennzeichnet dadurch, dass** nach dem Verpressen (Schritt c))
d) die Formteile bei einer Temperatur von über 180 mindestens 30 min gelagert werden.

3. Verfahren nach Anspruch 1 oder 2, **dadurch gekennzeichnet, dass** in Schritt a) das Molverhältnis Melamin : Formaldehyd zwischen 1 : 1 und 1:1,9 liegt.

4. Verfahren nach einem der Ansprüche 1 bis 3, **dadurch gekennzeichnet, dass** der Schaumstoff in Schritt b) bei einer Temperatur von 110 bis 160°C 5 bis 60 min getempert wird.

5. Verfahren nach einem der Ansprüche 1 bis 4, **dadurch gekennzeichnet, dass** der getemperte Schaumstoff in Schritt c) bei einer Temperatur von 180 bis 220°C verpresst wird.

6. Verfahren nach einem der Ansprüche 1 bis 5, **dadurch gekennzeichnet, dass** in Schritt c) eine Kaschierung aus einer hydrophoben oder oleophoben Textilschicht aufgebracht wird.

7. Formteile aus Melamin/Formaldehyd-Schaumstoff mit einer Formaldehyd-Emission von unter 0,1 ppm, bestimmt nach DIN 55666, erhältlich nach den Verfahren gemäß den Ansprüchen 1 bis 6.

8. Verwendung der Formteile nach Anspruch 7 zur akustischen oder thermischen Isolierung im Fahrzeugbau, im Maschinenbau, im Bauwesen oder zur Isolierung von Rohrleitungen.

## Claims

1. Process for the production of shaped articles from melamine/formaldehyde foam, **characterized by** the following steps:
a) a foam is produced from a melamine/formaldehyde precondensate having a molar melamine:formaldehyde ratio greater than 0.5,
b) the foam obtained is annealed at a temperature of less than 200°C, and
c) the annealed foam is moulded in a press at a temperature of from 160 to 240°C under absolute pressure of from 5 to 100 bar in the course of from 15 to 120 sec to give the shaped article.

2. Process according to Claim 1, **characterized in that**, after the moulding (step c)),
d) the shaped articles are stored at a temperature above 180°C for at least 30 min.

3. Process according to Claim 1 or 2, **characterized in that**, in step a), the molar melamine:formaldehyde ratio is from 1:1 to 1:1.9.

4. Process according to any of Claims 1 to 3, **characterized in that** the foam is annealed in step b) at a temperature of from 110 to 160°C for from 5 to 60 min.

5. Process according to any of Claims 1 to 4, **characterized in that** the annealed foam is moulded in step c) at a temperature of from 180 to 220°C.

6. Process according to any of Claims 1 to 5, **characterized in that**, in step c), a lamination of a hydrophobic or oleophobic textile layer is applied.

7. Shaped articles of melamine/formaldehyde foam having a formaldehyde emission of less than 0.1 ppm, determined according to DIN 55666, obtainable by the process according to Claims 1 to 6.

8. Use of the shaped articles according to Claim 7 for acoustic or thermal insulation in vehicle construction, in mechanical engineering or in the building industry or for insulating pipelines.

## Revendications

1. Procédé de fabrication de moules en mousse de mélamine/formaldéhyde, **caractérisé par** les étapes suivantes:
a) un matériau en mousse est fabriqué à partir d'un précondensat de mélamine/formaldéhyde selon un rapport molaire mélamine:formaldéhyde supérieur à 0,5,
b) le matériau en mousse obtenu est trempé à une température inférieure à 200 °C, et
c) le matériau en mousse trempé est comprimé dans une presse à une température de 160 à 240 °C et une pression absolue de 5 à 100 bars en l'espace de 15 à 120 secondes pour former le moule.

2. Procédé selon la revendication 1, **caractérisé en ce qu'**après la compression (étape c))
d) le moule est stocké à une température supérieure à 180 °C pendant au moins 30 minutes.

3. Procédé selon la revendication 1 ou 2, **caractérisé en ce que** le rapport molaire de l'étape a) mélamine:formaldéhyde se situe entre 1:1 et 1:1,9.

4. Procédé selon l'une des revendications 1 à 3, **caractérisé en ce que** le matériau en mousse de l'étape b) est trempé à une température de 110 à 160°C pendant 5 à 60 minutes.

5. Procédé selon l'une des revendications 1 à 4, **caractérisé en ce que** le matériau en mousse trempé de l'étape c) est comprimé à une température de 180 à 220°C.

6. Procédé selon l'une quelconque des revendications 1 à 5, **caractérisé en ce qu'**une stratification d'une couche textile hydrophobe ou oléophobe est réalisée à l'étape c).

7. Moule en mousse de mélamine/formaldéhyde avec une émission de formaldéhyde inférieure à 0,1 ppm, déterminée selon la norme DIN 55666, que l'on peut obtenir selon les procédés des revendications 1 à 6.

8. Utilisation des moules selon la revendication 7 pour l'isolement acoustique ou thermique dans l'industrie automobile, dans l'industrie mécanique, dans le bâtiment ou pour l'isolement de canalisations.
